# EUROPEAN PATENT SPECIFICATION

(11) **EP 1 111 910 B1**
(45) Date of publication and mention of the grant of the patent: **29.09.2004**
(21) Application number: 01102495.7
(22) Date of filing: 18.04.1994
(51) Int. Cl.: H04N 5/262

(54) **Media pipeline with multichannel video processing and playback**
Medien Pipeline mit Mehrwegevideoverarbeitung und Wiedergabe
Pipeline pour signaux video permettant un traitement et une reproduction video multicanal

(30) Priority: 16.04.1993 GB 9307894
(43) Date of publication of application: 27.06.2001
(62) Divisional of application: 94914827.4
(73) Proprietor: AVID TECHNOLOGY, INC., Tewksbury, MA 01876 (US)
(72) Inventor: Kurtze, Jeffrey, Nashua, NH 03062 (US); Cacciatore, Ray, Westford, MA 01886 (US); Zawojski, Peter, Merrimack, NH 03054 (US); Peters, Eric C., Carlisle, MA 01741 (US); Walsh, John Jr., North Chelmsford, MA 01863 (US)
(74) Representative: Kazi, Ilya

(56) References cited:
- EP-A- 0 480 625
- EP-A- 0 599 607
- WO-A-91/10323
- WO-A-95/26100
- US-A- 4 698 682

## Description

### Background of the Invention

Technology for manipulating digital video has progressed to the point where it can be readily processed and handled on computers. For example, the Avid/1 Media Composer, available from Avid Technology, Inc. of Tewksbury, Massachusetts, is a system wherein digital video can be readily captured, edited, and displayed for various purposes, such as broadcast television and film and video program post-production.

The Avid/l Media Composer uses a media pipeline to provide real-time digital video output on a computer display. This media pipeline 30 is shown in Fig. 1 and is described in more detail in U.S. Patent No. 5,045,940, issued September 3, 1991. In this media pipeline 30, a permanent storage 40 stores sequences of digital still images which represent digital video and are played back at a rate which provides the appearance of video. The sequences of digital still images do not include any frame synchronization or other type of timing information which are typically found in television signals. The still images also typically are stored in compressed form. The stored sequences are accessed and placed in a data buffer 42 from where they are provided to a compression/decompression system 44. The output of the compression/decompression system 44 is applied to a frame buffer 46 which converts the still image to a typical video signal which is then applied to an input/output unit 48. Each of the systems 40, 42, 44, 46, and 48 in this media pipeline 30 operate bi-directionally. That is, the output process discussed above can be reversed and video signals can be input via input/output unit 48 to the frame buffer 46 where they are converted to a sequence of digital still images. The images in the sequence are compressed by compression/decompression system 44, stored in data buffer 42 and then transferred to the permanent storage 40.

Although the media pipeline provides many advantages for Although the media pipeline provides many advantages for digital video, including enabling broadcast and editing from the stored digital images in a computer system, this media pipeline is not able to provide real-time digital video effects including complex arbitrary three-dimensional effects, simple, two-dimensional effects such as resizing, x-y translation, rotating, layering (an appearance of picture-in-picture), and finally simple effects such as dissolves, wipes, fades and luma and/or chroma keying. In order to perceive such effects on the computer, the effect generally is first generated (not in real time), then digitized and stored if generated on a tape and finally played back.

US-A-4698682 describes an apparatus for smoothing motion in a computerised graphics system by dissolving from one video signal to another rather than effecting a hard switch between video signals.

EP-A-480 625 discloses a device for interpolating video frames, for example in an animated sequence, by blending colour values of adjacent frames.

The invention is set out in the independent claims to which reference should be made. Preferred embodiments are defined in the dependent claims.

One embodiment provides a circuit for processing sequences of digital still images to provide real-time digital video effects comprising:
a first channel for communicating a first sequence of digital still images at a rate for simulating video;
a second channel for communicating a second sequence of digital still images at a rate for simulating video;
a controller for directing still images to one of the first and second channels; and
a blender has a first input connected to the first channel, a second input connected to the second channel and an output providing a combination of the first and second sequences of digital still images at a rate for simulating video.

### Brief Description of the Drawing

In the drawing,
Fig. 1 is a block diagram of a media pipeline as is used in the prior art;
Fig. 2 is a block diagram of a modified media pipeline in accordance with the present invention;
Fig. 3 is a more detailed block diagram of a modified compression/decompression subsystem of the media pipeline in accordance with the present invention;
Fig. 4 is a block diagram of a modified media pipeline in accordance with the present invention to provide real time digital video effects;
Fig. 5 is a block diagram of the α generator for box wipes;
Fig. 6 is a flow chart describing the operation of a state machine for each scan line in a frame for a box wipe;
Fig. 7 is a flow chart describing the operation of a state machine for each pixel in a scan line for a box wipe; and
Fig. 8 is a diagram showing how α is determined for different regions of an image for a box wipe.

### Detailed Description

The present invention will be more completely understood through the following detailed description which should be read in conjunction with the attached drawing in which similar reference numbers indicate similar structures. All references cited herein, including pending patent applications, are hereby expressly incorporated by reference.

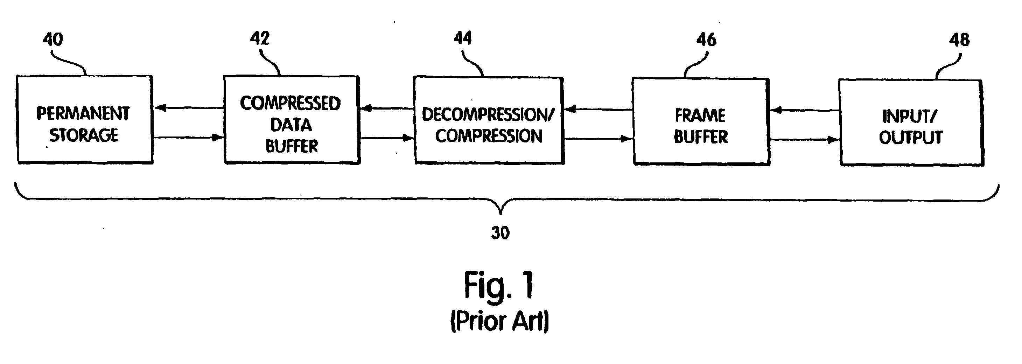

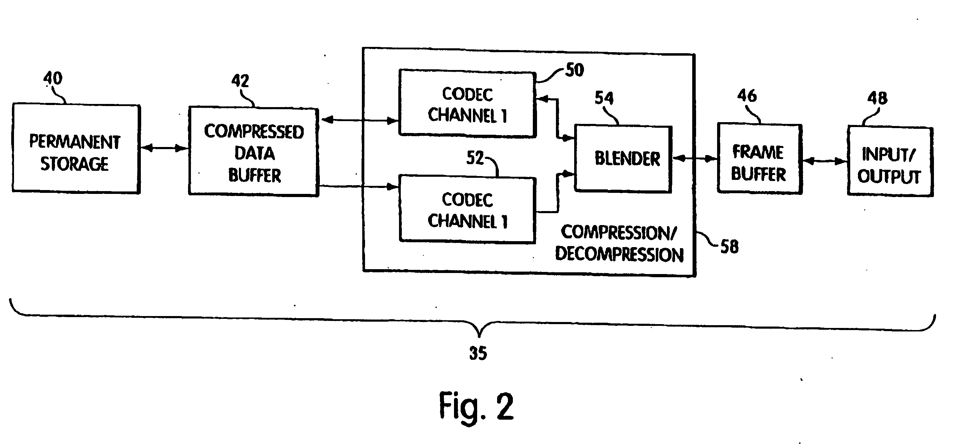

A media pipeline 35 with two channels of digital video for providing effects will now be described in connection with Fig. 2. The media pipeline 30 shown in Fig. 1 is . modified to include a compression/decompression (CODEC) unit 58 which is a modification of compression/decompression system 44 of Fig. 1. The CODEC unit 58 has two CODEC channels 50 and 52. One is used for compression and decompression, i.e., for both recording and playback, while the other is used only for playback. The outputs of these channels are fed to a blender 54 which combines them according to the desired effect. It is not necessary to use compressed data; however, compression is preferable to reduce storage requirements. This compression/decompression unit 58 is described in more detail in British provisional specification 9307894.7, filed April 16, 1993, under U.S. foreign filing license 504287 granted April 13, 1993.

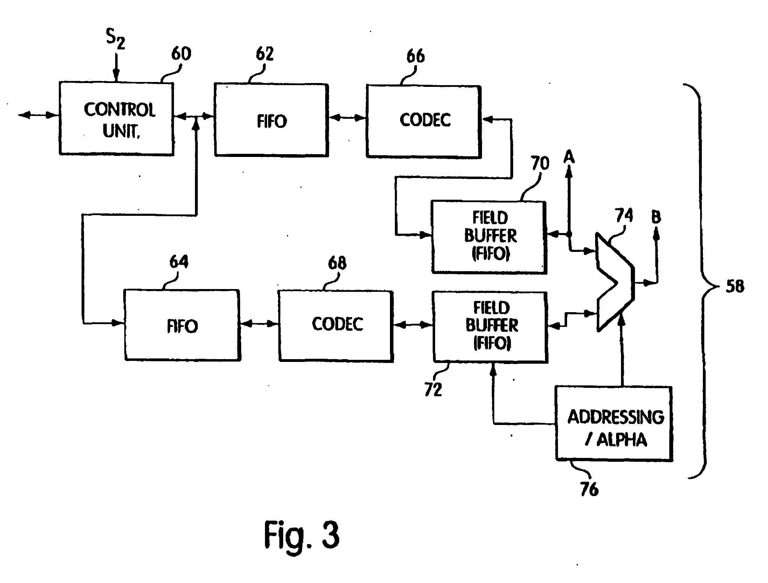

This CODEC unit 58 will now be described in more detail in connection with Fig. 3. In this figure, a control unit 60 controls two channels of coder/decoders. The modification to the media pipeline 30 is made by assigning, in the control unit 60, different sections of the compressed data buffer 42 to each channel. A sequence of digital still images is also assigned to a channel. Thus, when the sequence is read into the compressed data buffer 42, it is input to the section assigned to the channel for that sequence. Thus, reading and writing of data into the FIFO 62 and 64 for the CODECs 66 and 68 is based on the assignment of a channel to a selected sequence of digital still images.

Each channel has a separate CODEC, either a first CODEC 66 or a second CODEC 68. The CODECs typically use the Joint Photographic Expert Group (JPEG) proposed standard for still image compression. Such CODECs are commercially available, such as the CL550 available from C-Cube of Milpitas, California. Each CODEC has a respective first-in, first-out (FIFO) memory elements 62 and 64. The FIFO memory elements 62 and 64 feed respectively to the CODECs 66 and 68 of which the outputs are applied to field buffers 70 and 72, which are also preferably FIFO memory elements. These two channels may be blended using a blender 74 which is controlled by an addressing and alpha information unit 76, as will be described in more detail below. The blender 74 and alpha and addressing information unit 76 are preferably implemented using a field reprogrammable gate array such as the XC3090 manufactured by XiLinx.

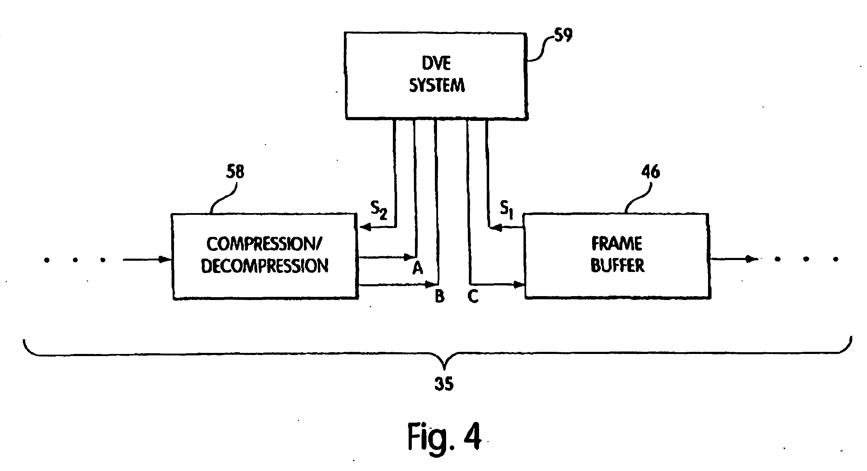

Alternatively, a first output sequence may be provided by output A from the FIFO 70 for CODEC 66, and a second output sequence may then be provided by the output of the blender, when no blending is performed, as the output B. Thus, FIFO 70 and blender 74 act as first and second sources of sequences of digital still images. The outputs A and B may be applied to a digital video effects system 59 as shown in Fig. 4. This embodiment is useful for providing arbitrary three-dimensional video effects, as are described in U.S. patent application entitled Media Pipeline with Mechanism for Real-Time Addition of Digital Video Effects filed March 18, 1994 by Harry Der et al., and assigned to Avid Technology, Inc. of Tewksbury, Massachusetts.

More complex, two-dimensional effects can also be made using techniques known in the art, including X-Y translation, rotation and scaling. An additional effects board, similar to that for the three-dimensional, arbitrary effects, can be provided so as to perform an operation on a single stream. To provide this operation, the output A as shown in Fig. 4 is applied to such an effects generator, the output of which would be applied to the input of the blender originally designed to receive channel A. When this capability is provided, the digital effects typically produce an output using the YUV data format with four bits for each of the Y, U and V parameters (4:4:4). In contrast, the normal data format for channels A and B is 4:2:2. Thus, in this instance, the blender 76 should be designed so as to optionally process channel A for either 4:4:4 format or 4:2:2 format, according to whether such digital effects are being provided.

Provision of simpler video effects in real time, such as box wipes and chroma and luma keys, using blender 74 and alpha and addressing information 76, will now be described. Blending of two streams (A and B) of video typically involves the application of the function αA + (1-α)B to the streams of video information, where a is a value which can vary from pixel to pixel in an image, and where A and B, at any given point in time, are pixels in corresponding frames in the two streams (A and B) of video. Each effect is thus applied to one frame from each of the two streams. (One normally does not perform an effect on only a fraction of a frame). Given α, at any point in time and the addresses for pixels A and B, the output image can be generated. The blender 74 which performs this operation be determining the result of the combination αA + (1-α)B can be implemented using standard digital hardware design techniques. Preferably, a field reprogrammable gate array is used to implement the function (A-B)α + B.

The value of α applied to two pixels is dependent upon the kind of effect to be provided. For example, dissolves uses the same a for for all pixels in one frame, α is gradually decreased for subsequent frames in the dissolve. The pair of pixels to be combined is also dependent upon the kind of effect to be provided. The indication of which pair of pixels to use is called the addressing information. For each kind of effect to be provided, a state machine and state variables can be defined for processing one frame of output video. The two general types of effects are chroma and/or luma keys and box wipes, which include dissolves and fades.

For example, in order to implement chroma and/or luma keying, two threshold values D1 and D2 and a key point Kc are defined by the user for each parameter of a pixel. These effects are typically applied to the YUV representation of an image. Thus, an incoming image is processed by comparing the pixel Y, U and v values to the key points and threshold values defined for Y, U, and V. In particular, using the parameter U as an example, ∥Kc-U∥ is calculated. If this value is less than D1, α is set to be the maximum possible value. If this value is greater than D2, α is set to be the minimum possible value. When the value is somewhere between D1 and D2, a value for α is determined according to this value. In one embodiment of the invention, D1-D2 is required to be some fixed number, e.g., 16. The magnitude of this fixed number represents the desired number of α. In this embodiment, when the value of ∥Kc-U∥ is between D1 and D2, the value ∥Kc-U∥-D1 is applied to a lookup table (stored in a random access, preferably rewritable, memory), which stores corresponding values of a to be used. The values of α may be any function of the input ∥Kc-U∥-D1, such as a step function, a sigmoid function, a ramp or any function desired by a user. Typically, only Y or U,V are keyed and processed. One could apply keying to all of Y, U and V at once, and combine the resulting α values, for example, by using the function (1/2(αᵤ+(αᵥ) AND α_{y}).

Box wipes with a border can also be provided. A box wipe Box wipes with border can also be provided. box wipe is a transition between two streams defined by a rectangular shape. Within the rectangle, information from one channel is provided. Outside the rectangle, information from the other channel is provided. The transition region can be strictly defined by the border of the rectangle or a border color can be provided. The transition can be described as a linear ramp (defined by a ratio of the channels to each other). The transition is thus defined by the lower and upper limits of the ramp, the step size, and the duration. All of these parameters should be user definable. Also, the coordinates of the box should be programmable to provide a horizontal wipe, a vertical wipe, or some corner to corner wipe. Typically, a blend is performed from the first channel to the border, from the border to the next channel, or among both channels. A state machine can readily be defined according to the variables defining the wipe so as to provide an output a value for each pair of pixels to be combined. There are three values used to define the final α. The αᵢₙᵢₜ values define the initial α_{X} and α_{Y} values, where α_{X} and α_{Y} are accumulated lues according to the state machine. In the simplest wipe, a dissolve, the initial values are held, i.e., not changed, throughout a whole frame. In the other box wipes, α_{X} and α_{Y} may change, according to the desired wipe. In this process, the final α value is typically taken to be α_{X}, subject to a limiting function defined by α_{Y}. That is, the final α typically is α_{X} when α_{X} is less than α_{Y} and typically is α_{Y} when α_{X} is greater than α_{Y}.

A wipe is defined by two sets of parameters. The first set is parameters for the X direction in a frame; the second set is parameters for the Y direction, defining changes between scan lines in the effect. Both of the X and Y parameters include four groups of four parameters, each group representing an operation, including offset, control, interval, and delta information. The offset information defines where blending is to begin. In the X direction, it identifies the pixel in the scan line where the first blend begins. In the Y direction, it identifies the scan line where blending is to begin. The next information is control information identifying whether further operations in the scan line, or in the frame will follow. For the X parameter, this control information is represented by two bits, wherein the first bit represents whether video is swapped between the A and B channels. The other bit indicates whether another operation in the X direction will appear. After the control information is the interval over which the blend is to be performed. The interval either identifies the number of scan lines or a number of pixels within one scan line. Finally, the delta information represents an increment to be added to α_{X} or α_{Y} for each pixel over the defined interval .
Thus, a wipe is defined by four groups of four operations in each of the X and Y directions. The first operation signifies the transition from channel A to the border; the second from the border to the second channel; the third from the second channel to the border; and the fourth from the border to the first channel. If there is no border, only two operations are used and the second operation indicates that there is no further operation to be performed either for the scan line or for the frame.

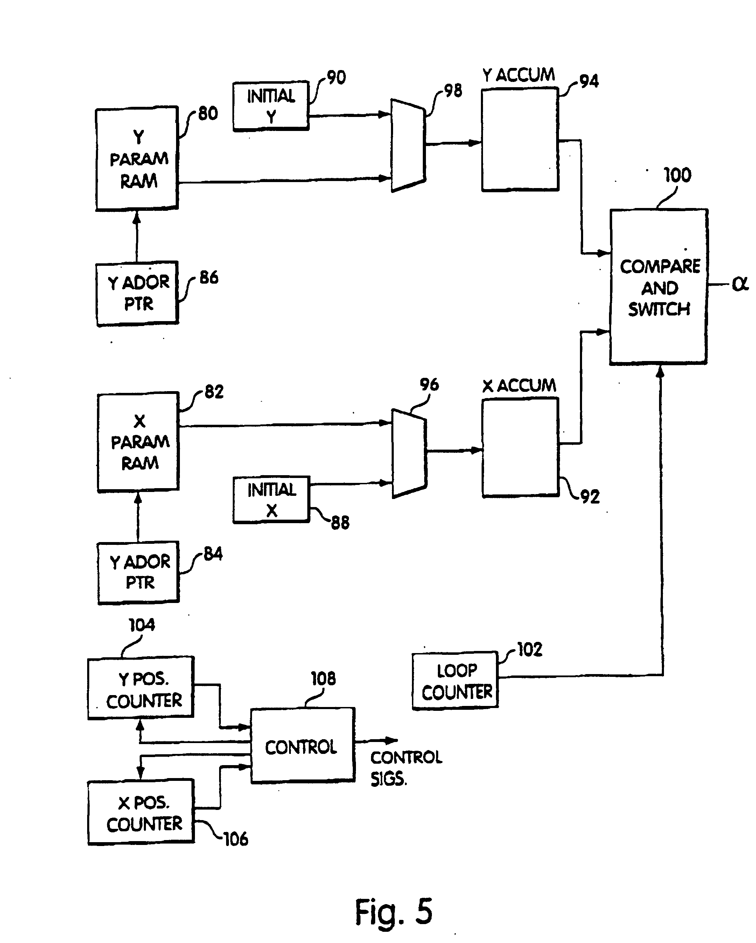

Given the operations defining the wipe to be performed, including the four groups of operational information for each of the X and Y parameters, a state machine can be used to determine a for each pixel in the frame. These state machines will now be described in connection with Figs. 5 through 8.

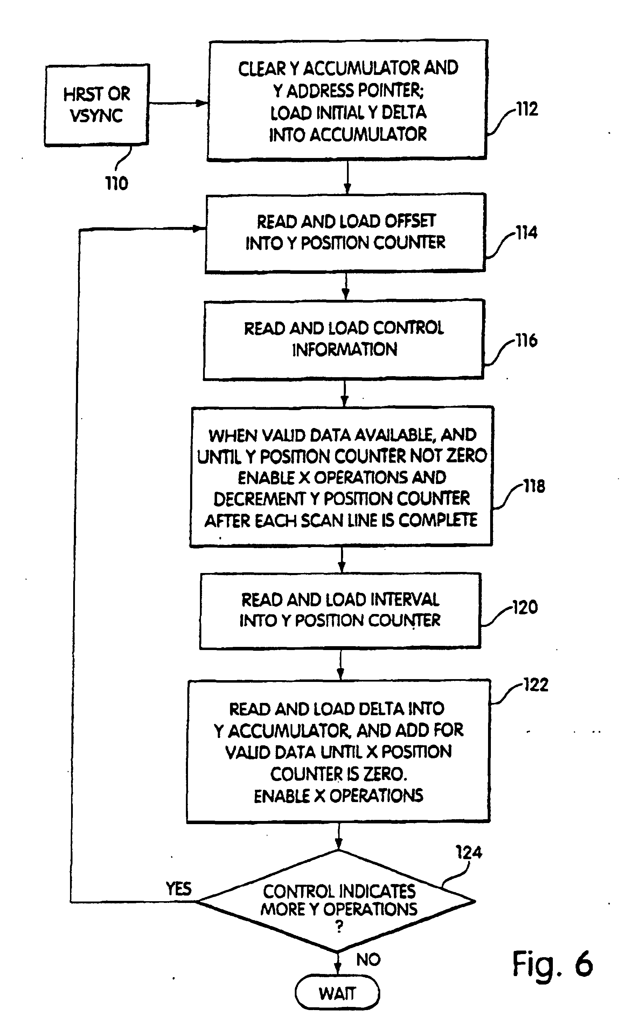

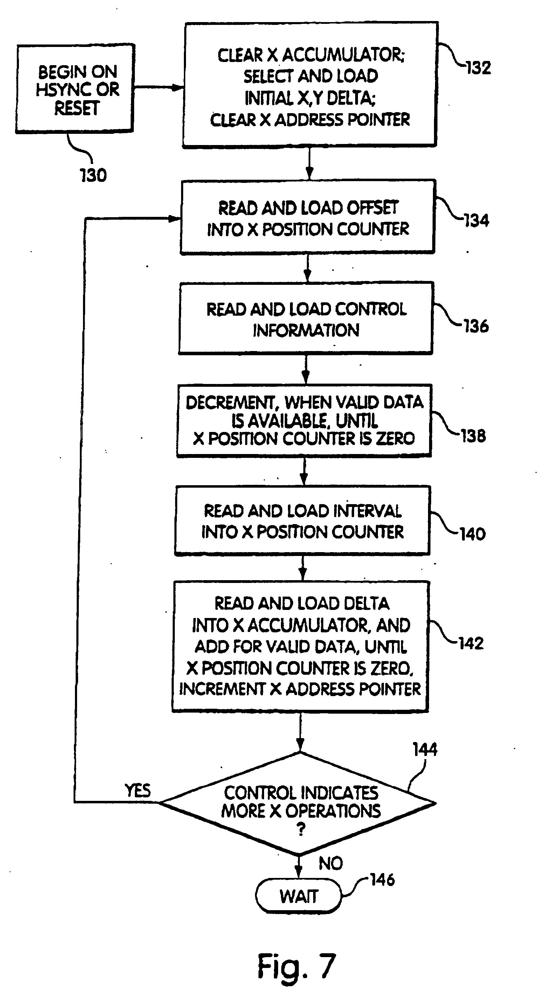

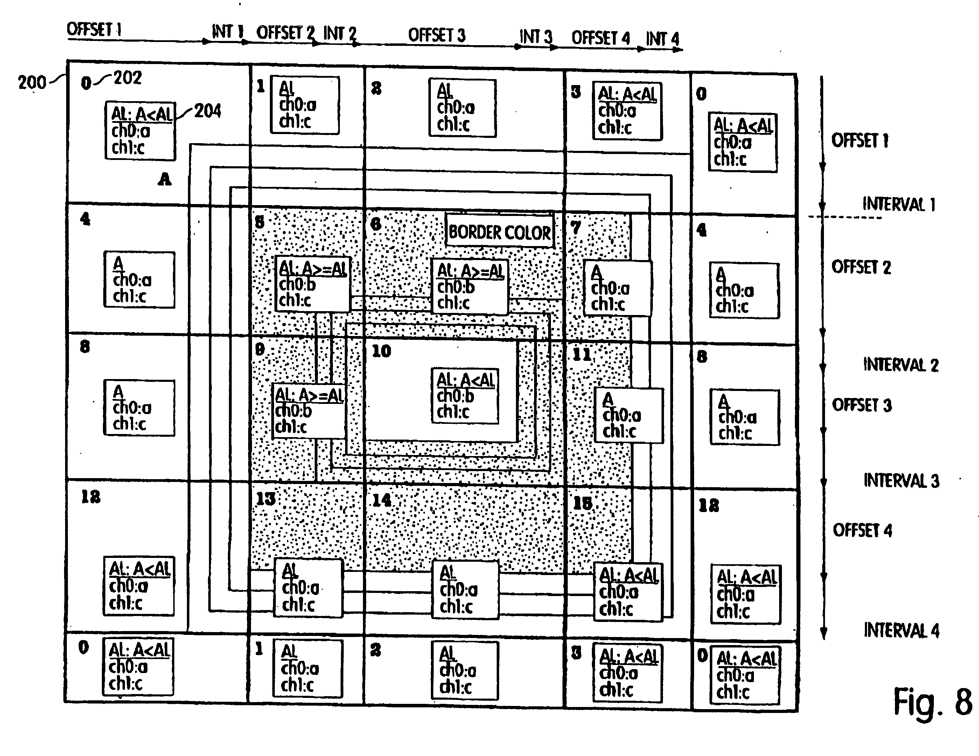

Fig. 5 is a block diagram illustrating some structures controlled by a state machine. The state machine's operation will be described in connection with the flow charts of Figs. 6 and 7. In Fig. 5, X parameter memory 82 and Y parameter memory 80 store the operations to be performed. An address pointer is stored in registers 84 and 86 for each of these memories as X and Y address pointers. Initial X and Y delta values are also stored in registers 88 and 90. These are fed to accumulators for the X and Y values 92 and 94 via switches 96 and 98. The output of the accumulators 94 and 92 are fed to compare and switch unit 100, the output of which provides the a value in a manner to be described below in connection with Fig. 8. There is also a loop counter 102 which indicates the part of frame on which the effect is being performed. The significance of this will also be discussed further below in connection with Fig. 8. There is also a Y position counter 104 and an X position counter 106 which are used by the control 108 which operates in accordance with the flow charts of Figs. 6 and 7.

Figs. 6 and 7 will now be described.

Upon a horizontal reset (HRST) or vertical sync (VSYNC), as indicated at step 110, the Y accumulator 94 and Y address pointer 86 are cleared. An initial Y delta value 90 is loaded then into the accumulator 94 via switch 98 (step 112). An offset is then read from the Y parameter memory 80 into the Y position counter 104 (step 114). Control information is then read from the Y parameter memory 80 into the loop counter 102 (step 116).

When valid data is available to be processed, and until the Y position counter 104 is not zero, operations on a scan line are performed in step 118 as will be discussed below in connection with Fig. 7. After each scan is processed, the Y position counter 104 is decremented. When the Y position counter reaches zero, the interval is read and loaded from parameter memory 80 into the Y position counter 104 (step 120). A delta value is then read from the Y parameter memory 80 into the Y accumulator 94 and is added to the current value therein (step 122). This value is added for each scan line until the Y position counter is then zero. Each scan line is processed in accordance with the steps described below in connection with Fig. 7. When the Y position counter 104 is zero, the control information is examined in step 124 to determine if further Y operations are to be performed. If there are further operations to be performed, processing returns to step 114. Otherwise, the system waits until another horizontal reset or vertical sync occurs.

Operaticns on one scan line will now be described in connection with Fig. 7. These operations begin in step 130 upon the receipt of a horizontal sync or reset. In step 132, the X accumulator 92 and X address pointer 84 are cleared and an initial delta value at 88 is then loaded into the X accumulator 92 via switch 96. An offset is then loaded from the X parameter memory 82 in step 134 into the X position counter 106. Next control information is read from the X parameter memory 82 into loop counter 102 in step 136. The X position counter is decremented when valid data is available, until the X position counter 106 is zero (step 138). The interval is then read from X parameter memory 82 into X position counter 106 in step 140. The delta value is then read from X parameter memory 82 into the X accumulator 92 and is added to the current value in the accumulator 92 until the X position counter is zero (step 142). The X address pointer and Y address pointer are incremented along this process to identify the correct operation. If the control information indicates that more X operations are to be performed, as determined in step 144, processing returns to step 134. Otherwise, the system waits in step 146 until another horizontal sync or reset occurs.

For each pixel in the scan line, as indicated by each decrement operation on the X position counter 106, an α value is output from the compare and switch unit 100. How this operation is provided was discussed above. Further details for more complicated box wipes in this selection will now be provided in connection with Fig. 8.

As indicated in Fig. 5, the compare and switch unit 100 receives an α_{Y} value from the Y accumulator 94 and α_{X} value from X accumulator 92 and a loop counter 102. The loop counter indicates which quadrant in a box wipe with a border is being processed. The indication of a quadrant can readily be determined by the status of the state machine and a counter. Because the X operations and Y operations are each defined by four groups of four parameters, wherein each group identifies an operation to be performed when a portion of an image, there are precisely sixteen combinations of X parameters and Y parameters, each identifying a quadrant of the resulting image. The a value for each quadrant has a predetermined relationship with the α_{X} and α_{Y} values. Thus, according to the loop control 102, the appropriate selection among α_{X} and α_{Y} can be provided.

The relationships of α to α_{X} and α_{Y} for each quadrant will now be described in connection with Fig. 8.

Fig. 8 illustrates 25 regions of a box wipe with a border and transitions between one image, a border color, and another image. There are fifteen general types of regions to be considered in this effect, each being numbered accordingly in the upper left hand corner of the box. For example, the first region 200 is labelled zero as indicated at 202. A box 204 is shown in each region identifying the source of image data (where CH0 corresponds to the channel applied to input A of the blender 76 and CH1 corresponds to the input applied to input B of the blender). The first line in box 204 indicates the α value to be provided to the blender. "A" indicates that α_{X} is supplied as α, as in regions 4, 7, 8 and 11. "AL" indicates that α_{Y} is supplied as the α value, as in regions 1, 2, 13 and 14. "AL:A < AL" indicates that α_{X} is provided when it is less than α_{Y} and α_{Y} is provided otherwise, as in regions 0, 3, 10, 12 and 15. "AL:A > = AL" indicates that α_{Y} is provided unless α_{X} is greater than α_{Y} when α_{X} is provided, as in regions 5, 6, and 9.

Having now described a few embodiments of the invention, it should be apparent to those skilled in the art that the foregoing is merely illustrative and not limiting, halving been presented by way of example only. Numerous modifications and other embodiments are within the scope of one of ordinary skill in the art and are contemplated as falling within the scope of the invention as defined by the appended claims and equivalents thereto.

## Claims

1. A process for use in a video editing system for generating a digital video effect with an effects processing device using first and second sequences (A, B) of digital still images from one or more data files stored in a file system (40), during playback by an output device of a third sequence of digital still images including the digital video effect generated by the effects processing device, wherein the effects processing device has a first buffer (42) for storing video data before processing for the first sequence and a second buffer (42) for storing video data before processing for the second sequence, and a third buffer (46) for storing the generated third sequence before playback by the output device, the process comprising:
determining an amount of data in the first buffer and in the second buffer;
selecting one of the first and second sequences(A, B), wherein the selected sequence has the least amount of data in the buffer (42) associated with the sequence, and selecting a desired amount of video data to be read for the sequence;
for the selected sequence, reading the desired amount of video data from the data file for the selected sequence in the file system (40);
receiving effect parameters defining the digital video effect;
processing the video data in the first and second buffers (42) received from the file system using the effects processing device (59) according to the effect parameters to generate the third sequence to the third buffer for playback by the output device; and
repeating steps of determining, selecting, reading and processing during playback of the third sequence by the output device.

2. The process of claim 1, wherein the effect parameters define a transition from the first sequence (A) to the second sequence (B), and wherein the method further comprises:
controlling reading of the first and second sequences (A, B) from the first and second buffers, respectively; and
generating the third sequence of digital still images from the read first sequence and the read second sequence in accordance with the defined transition.

3. The process of any of the preceding claims, wherein the output device is a video encoder, the method further comprising:
transferring the third sequence of digital still images to the video encoder to be encoded in a motion video signal, and
wherein processing the video data is performed in response to demands from the video encoder during playback.

4. The process of any of the preceding claims, wherein the first and second buffers both receive and output video data on a first-in, first-out basis.

5. The process of any of the preceding claims, wherein a rate of playback of images in the third sequence is user-selectable

6. The process of any of the preceding claims, wherein processing comprises:
determining a blending value for blending a first pixel from the first sequence (A) and a second pixel from the second sequence (B), wherein the blending value is based on the effect parameters, a position of the first pixel in the first image, and a position of the second pixel in the second image; and
determining a blending function defining the blend of the first pixel and the second pixel based on the blending value.

7. The process of claim 6, wherein the blending function is defined as: α A **+** (1 - α )B, where α is the blending value, A is the first pixel, and B is the second pixel.

8. The process of claim 6, further comprising:
determining the first pixel of the first sequence and the second pixel of the second sequence to blend based on the effect parameters.

9. Apparatus implementing the process of any of the above claims.

10. A video editing system for generating a digital video effect with an effects processing device using first and second sequences (A, B) of digital still images from one or more data files stored in a file system (40), during playback by an output device of a third sequence of digital still images including the digital video effect generated by the effects processing device, wherein the effects processing device has a first buffer (42) for storing video data before processing for the first sequence and a second buffer (42) for storing video data before processing for the second sequence, and a third buffer (46) for storing the generated third sequence before playback by the output device, the system being adapted to:
determine an amount of data in the first buffer and in the second buffer;
select one of the first and second sequences (A, B), wherein the selected sequence has the least amount of data in the buffer (42) associated with the sequence, and select a desired amount of video data to be read for the sequence;
read, for the selected sequence, the desired amount of video data from the data file for the selected sequence in the file system (40);
receive effect parameters defining the digital video effect;
process the video data in the first and second buffers (42) received from the file system using the effects processing device (59) according to the effect parameters to generate the third sequence to the third buffer for playback by the output device; and
repeat the steps of determining, selecting, reading and processing during playback of the third sequence by the output device.

11. The system of claim 10, wherein the effect parameters define a transition from the first sequence (A) to the second sequence (B), and wherein the system is further adapted to:
control reading of the first and second sequences (A, B) from the first and second buffers, respectively; and
generate the third sequence of digital still images from the read first sequence (A) and the read second sequence (B) in accordance with the defined transition.

12. The system of claim 10 or 11, wherein the output device is a video encoder, the system being further adapted to:
transfer the third sequence of digital still images to the video encoder to be encoded in a motion video signal, and
process the video data in response to demands from the video encoder during playback.

13. The system of any of the claims 10 to 12, wherein the first and second buffers are adapted to both receive and output video data on a first-in, first-out basis.

14. The system of any of claims 10 to 13, comprising a user-selectable rate of playback of images in the third sequence.

15. The system of any of claims 10 to 14, wherein the processing components are adapted to:
determine a blending value for blending a first pixel from the first sequence (A) and a second pixel from the second sequence (B), wherein the blending value is based on the effect parameters, a position of the first pixel in the first image, and a position of the second pixel in the second image; and
determine a blending function defining the blend of the first pixel and the second pixel based on the blending value.

16. The system of claim 15, wherein the blending function is defined as: α A **+** (1 - α )B, where α is the blending value, A is the first pixel, and B is the second pixel.

17. The system of claim 15, being further adapted to:
determine the first pixel of the first sequence (A) and the second pixel of the second sequence (B) to blend based on the effect parameters.

## Patentansprüche

1. Verfahren für die Verwendung in einem Videoeditierungssystem, um einen digitalen Videoeffekt mit einer Effekte-Verarbeitungsvorrichtung unter Verwendung einer ersten und einer zweiten Sequenz (A, B) digitaler Standbilder aus einer oder aus mehreren Datendateien, die in einem Dateiensystem (40) gespeichert sind, während der Wiedergabe durch eine Ausgabevorrichtung einer dritten Sequenz digitaler Standbilder, die den durch die Effekte-Verarbeitungsvorrichtung erzeugten digitalen Videoeffekt enthält, zu erzeugen, wobei die Effekte-Verarbeitungsvorrichtung einen ersten Puffer (42), um Videodaten vor der Verarbeitung der ersten Sequenz zu speichern, einen zweiten Puffer (42), um Videodaten vor der Verarbeitung der zweiten Sequenz zu speichern, und einen dritten Puffer (46), um die erzeugte dritte Sequenz vor der Wiedergabe durch die Ausgabevorrichtung zu speichern, aufweist, wobei das Verfahren umfasst:
Bestimmen einer Datenmenge in dem ersten Puffer und in dem zweiten Puffer;
Auswählen entweder der ersten oder der zweiten Sequenz (A, B), wobei die ausgewählte Sequenz die kleinste Datenmenge in dem der Sequenz zugeordneten Puffer (42) besitzt, und Auswählen einer gewünschten Menge von zu lesenden Videodaten für diese Sequenz;
für die ausgewählte Sequenz Lesen der gewünschten Menge von Videodaten aus der Datendatei für die ausgewählte Sequenz in dem Dateiensystem (40);
Empfangen von Effektparametern, die den digitalen Videoeffekt definieren;
Verarbeiten der Videodaten in dem ersten und in dem zweiten Puffer (42), die von dem Dateiensystem empfangen werden, unter Verwendung der Effekte-Verarbeitungsvorrichtung (59) gemäß den Effektparametern, um die dritte Sequenz für den dritten Puffer für die Wiedergabe durch die Ausgabevorrichtung zu erzeugen; und
Wiederholen der Schritte des Bestimmens, Auswählens, Lesens und Verarbeitens während der Wiedergabe der dritten Folge durch die Ausgabevorrichtung.

2. Verfahren nach Anspruch 1, bei dem die Effektparameter einen Übergang von der ersten Sequenz (A) zu der zweiten Sequenz (B) definieren, wobei das Verfahren femer umfasst:
Steuern des Lesens der ersten und der zweiten Sequenz (A, B) aus dem ersten bzw. dem zweiten Puffer; und
Erzeugen der dritten Sequenz digitaler Standbilder aus der gelesenen ersten Sequenz und der gelesenen zweiten Sequenz gemäß dem definierten Übergang.

3. Verfahren nach einem der vorhergehenden Ansprüche, bei dem die Ausgabevorrichtung ein Videocodierer ist, wobei das Verfahren ferner umfasst:
Übertragen der dritten Sequenz digitaler Standbilder an den Videocodierer, damit sie in ein bewegtes Videosignal codiert wird,
wobei die Verarbeitung der Videodaten in Reaktion auf Anforderungen von dem Videocodierer während der Wiedergabe ausgeführt wird.

4. Verfahren nach einem der vorhergehenden Ansprüche, bei dem der erste und der zweite Puffer Videodaten auf einer First-in/First-out-Basis empfangen und ausgeben.

5. Verfahren nach einem der vorhergehenden Ansprüche, bei der die Wiedergabegeschwindigkeit der Bilder in der dritten Sequenz vom Anwender wählbar ist.

6. Verfahren nach einem der vorhergehenden Ansprüche, bei dem die Verarbeitung umfasst:
Bestimmen eines Mischungswertes zum Mischen eines ersten Pixels von der ersten Sequenz (A) und eines Pixels von der zweiten Sequenz (B), wobei der Mischungswert auf den Effektparametern, einer Position des ersten Pixels in dem ersten Bild und einer Position des zweiten Pixels in dem zweiten Bild basiert; und
Bestimmen einer Mischungsfunktion, die die Mischung des ersten Pixels und des zweiten Pixels definiert, anhand des Mischungswertes.

7. Verfahren nach Anspruch 6, bei dem die Mischungsfunktion definiert ist durch: αA + (1 - α)B, wobei α der Mischungswert ist, A das erste Pixel ist und B das zweite Pixel ist.

8. Verfahren nach Anspruch 6, das ferner umfasst:
Bestimmen des ersten Pixels der ersten Sequenz und des zweiten Pixels der zweiten Sequenz für die Mischung anhand der Effektparameter.

9. Vorrichtung, die das Verfahren nach einem der obigen Ansprüche ausführt.

10. Videoeditierungssystem, um einen digitalen Videoeffekt mit einer Effekte-Verarbeitungsvorrichtung unter Verwendung einer ersten und einer zweiten Sequenz (A, B) digitaler Standbilder aus einer oder aus mehreren Datendateien, die in einem Dateiensystem (40) gespeichert sind, während der Wiedergabe durch eine Ausgabevorrichtung einer dritten Sequenz digitaler Stand-bilder, die den durch die Effekte-Verarbeitungsvorrichtung erzeugten digitalen Videoeffekt enthält, zu erzeugen, wobei die Effekte-Verarbeitungsvorrichtung einen ersten Puffer (42), um Videodaten vor der Verarbeitung der ersten Sequenz zu speichern, einen zweiten Puffer (42), um Videodaten vor der Verarbeitung der zweiten Sequenz zu speichern, und einen dritten Puffer (46), um die erzeugte dritte Sequenz vor der Wiedergabe durch die Ausgabevorrichtung zu speichern, aufweist, wobei das System so beschaffen ist, dass es:
eine Datenmenge in dem ersten Puffer und in dem zweiten Puffer bestimmt;
entweder die erste oder die zweite Sequenz (A, B) auswählt, wobei die ausgewählte. Sequenz die kleinste Datenmenge in dem der Sequenz zugeordneten Puffer (42) besitzt, und eine gewünschte Menge von zu lesenden Videodaten für diese Sequenz auswählt;
für die ausgewählte Sequenz die gewünschte Menge von Videodaten aus der Datendatei für die ausgewählte Sequenz in dem Dateiensystem (40) liest;
die Effektparameter, die den digitalen Videoeffekt definieren, empfängt;
die Videodaten in dem ersten und in dem zweiten Puffer (42), die von dem Dateiensystem empfangen werden, unter Verwendung der Effekte-Verarbeitungsvorrichtung (59) in Übereinstimmung mit den Effektparametern verarbeitet, um die dritte Sequenz für den dritten Puffer für die Wiedergabe durch die Ausgabevorrichtung zu erzeugen; und
die Schritte des Bestimmens, Auswählens, Lesens und Verarbeitens während der Wiedergabe der dritten Sequenz durch die Ausgabevorrichtung wiederholt.

11. System nach Anspruch 10, bei dem die Effektparameter einen Übergang von der ersten Sequenz (A) zu der zweiten Sequenz (B) definieren, wobei das System ferner so beschaffen ist, dass es:
das Lesen der ersten und der zweiten Sequenz (A, B) aus dem ersten bzw. dem zweiten Puffer steuert; und
die dritte Sequenz digitaler Standbilder aus der gelesenen ersten Sequenz (A) und der gelesenen zweiten Sequenz (B) gemäß dem definierten Übergang erzeugt.

12. System nach Anspruch 10 oder 11, bei dem die Ausgabevorrichtung ein Videocodierer ist, wobei das System ferner so beschaffen ist, dass es:
die dritte Sequenz digitaler Standbilder an den Videocodierer überträgt, damit sie in ein bewegtes Videosignal codiert werden, und
die Videodaten in Reaktion auf Anforderungen von dem Videocodierer während der Wiedergabe verarbeitet.

13. System nach einem der Ansprüche 10 bis 12, bei dem der erste und der zweite Puffer so beschaffen sind, dass sie Videodaten auf einer First-in-/First-out-Basis empfangen und ausgeben.

14. System nach einem der Ansprüche 10 bis 13, das eine vom Anwender wählbare Wiedergabegeschwindigkeit der Bilder in der dritten Sequenz aufweist.

15. System nach einem der Ansprüche 10 bis 14, bei dem die Verarbeitungskomponenten so beschaffen sind, dass sie:
einen Mischungswert zum Mischen eines ersten Pixels von der ersten Sequenz (A) und eines zweiten Pixels von der zweiten Sequenz (B) bestimmen, wobei der Mischungswert auf den Effektparametern, einer Position des ersten Pixels in dem ersten Bild und einer Position des zweiten Pixels in dem zweiten Bild basieren; und
eine Mischungsfunktion, die die Mischung des ersten Pixels und des zweiten Pixels definiert, anhand des Mischungswertes bestimmen.

16. System nach Anspruch 15, bei dem die Mischungsfunktion definiert ist durch: αA + (1 - α)B, wobei α der Mischungswert ist, A das erste Pixel ist und B das zweite Pixel ist.

17. System nach Anspruch 15, das ferner so beschaffen ist, dass es:
das erste Pixel der ersten Sequenz (A) und das zweite Pixel der zweiten Sequenz (B) für die Mischung anhand der Effektparameter bestimmt.

## Revendications

1. Procédé destiné à être utilisé dans un système de montage vidéo pour générer un effet de signal numérique avec un dispositif de traitement d'effets utilisant des première et seconde séquences (A, B) d'images fixes numériques d'un ou de plusieurs fichiers de données stockés dans un système de fichier (40), pendant la lecture par un dispositif de sortie d'une troisième séquence d'images fixes numériques comprenant l'effet vidéo numérique généré par le dispositif de traitement d'effets, dans lequel le dispositif de traitement d'effets a un premier tampon (42) pour stocker des données vidéo avant le traitement pour la première séquence et un second tampon (42) pour stocker des données vidéo avant le traitement pour la seconde séquence, et un troisième tampon (46) pour stocker la troisième séquence générée avant la lecture par le dispositif de sortie, le procédé comprenant :
la détermination d'une quantité de données dans le premier tampon et dans le second tampon ;
la sélection d'une des première et seconde séquences (A, B), dans lequel la séquence sélectionnée a la plus petite quantité de données dans le tampon (42) associé à la séquence, et la sélection d'une quantité souhaitée de données vidéo à lire pour la séquence ;
pour la séquence sélectionnée, la lecture de la quantité souhaitée de données vidéo du fichier de données pour la séquence sélectionnée dans le système de fichier (40) ;
la réception de paramètres d'effet définissant l'effet vidéo numérique ;
le traitement des données vidéo dans les premier et second tampons (42) reçues du système de fichier utilisant le dispositif de traitement d'effets (59) selon les paramètres d'effet pour générer la troisième séquence sur le troisième tampon pour la lecture par le dispositif de sortie ; et
la répétition des étapes de détermination, de sélection, de lecture et de traitement pendant la lecture de la troisième séquence par le dispositif de sortie.

2. Procédé selon la revendication 1, dans lequel les paramètres d'effet définissent une transition de la première séquence (A) jusqu'à la seconde séquence (B), et dans lequel le procédé comprend en outre :
la commande de lecture des première et seconde séquences (A, B) des premier et second tampons, respectivement ; et
la génération de la troisième séquence d'images fixes numériques à partir de la première séquence de lecture et de la seconde séquence de lecture selon la transition définie.

3. Procédé selon l'une quelconque des revendications précédentes, dans lequel le dispositif de sortie est un codeur vidéo, le procédé comprenant en outre :
le transfert de la troisième séquence d'images fixes vidéo au codeur vidéo à coder en un signal vidéo de mouvement ; et
dans lequel le traitement des données vidéo est réalisé en réponse à des demandes du codeur vidéo pendant la lecture.

4. Procédé selon l'une quelconque des revendications précédentes, dans lequel les premier et second tampons reçoivent et fournissent à la fois des données vidéo sur la base du premier entré, premier sorti.

5. Procédé selon l'une quelconque des revendications précédentes, dans lequel un débit de lecture d'images dans la troisième séquence est sélectionnable par l'utilisateur.

6. Procédé selon l'une quelconque des revendications précédentes, dans lequel le traitement comprend :
la détermination d'une valeur de mélange pour mélanger un premier pixel de la première séquence (A) et un second pixel de la seconde séquence (B), dans laquelle la valeur de mélange est sur la base des paramètres d'effet, d'une position du premier pixel dans la première image, et d'une position du second pixel dans la seconde image ; et
la détermination d'une fonction de mélange définissant le mélange du premier pixel et du second pixel sur la base de la valeur de mélange.

7. Procédé selon la revendication 6, dans lequel la fonction de mélange est définie par :
α A + (1 - α) B, où α est la valeur de mélange, A est le premier pixel, et B est le second pixel.

8. Procédé selon la revendication 6, comprenant en outre :
la détermination du premier pixel de la première séquence et du second pixel de la seconde séquence à mélanger sur la base des paramètres d'effet.

9. Appareil implémentant le procédé selon l'une quelconque des revendications précédentes.

10. Système de montage vidéo pour générer un effet vidéo numérique avec un dispositif de traitement d'effets utilisant des première et seconde séquences (A, B) d'images fixes numériques d'un ou de plusieurs fichiers de données stockés dans un système de fichier (40), pendant la lecture par un dispositif de sortie d'une troisième séquence d'images fixes numériques comprenant l'effet vidéo numérique généré par le dispositif de traitement d'effets, dans lequel le dispositif de traitement d'effets a un premier tampon (42) pour stocker des données vidéo avant le traitement pour la première séquence et un second tampon (42) pour stocker des données vidéo avant le traitement pour la seconde séquence, et un troisième tampon (46) pour stocker la troisième séquence générée avant la lecture par le dispositif de sortie, le système étant adapté pour :
déterminer une quantité de données dans le premier tampon et dans le second tampon ;
sélectionner une des première et seconde séquences (A, B), dans lequel la séquence sélectionnée a la plus petite quantité de données dans le tampon (42) associé à la séquence, et sélectionner une quantité souhaitée de données vidéo à lire pendant la séquence ;
lire, pendant la séquence sélectionnée, la quantité souhaitée de données vidéo du fichier de données pendant la séquence sélectionnée dans le système de fichier (40) ;
recevoir des paramètres d'effet définissant l'effet vidéo numérique ;
traiter des données vidéo dans les premier et second tampons (42) reçues du système de fichier utilisant le dispositif de traitement d'effets (59) selon les paramètres d'effet pour générer la troisième séquence sur le troisième tampon pour la lecture par le dispositif de sortie ; et
répéter les étapes de détermination, de sélection, de lecture et de traitement pendant la lecture de la troisième séquence par le dispositif de sortie.

11. Système selon la revendication 10, dans lequel les paramètres d'effet définissent une transition de la première séquence (A) à la seconde séquence (B), et dans lequel le système est en outre adapté pour :
commander la lecture des première et seconde séquences (A, B) des premier et second tampons, respectivement ; et
générer la troisième séquence d'images fixes numériques à partir de la première séquence de lecture (A) et de la seconde séquence de lecture (B) selon la transition définie.

12. Système selon la revendication 10 ou 11, dans lequel le dispositif de sortie est un codeur vidéo, le système étant en outre adapté pour :
transférer la troisième séquence d'images fixes vidéo vers le codeur vidéo à coder en un signal vidéo de mouvement ; et
traiter les données vidéo en réponse à des demandes du codeur vidéo pendant la lecture.

13. Système selon l'une quelconque des revendications 10 à 12, dans lequel les premier et second tampons sont adaptés à la fois pour recevoir et fournir des données vidéo sur la base du premier entré, premier sorti.

14. Système selon l'une quelconque des revendications 10 à 13, comprenant un débit sélectionnable par l'utilisateur de la lecture d'images dans la troisième séquence.

15. Système selon l'une quelconque des revendications 10 à 14, dans lequel les composants de traitement sont adaptés pour :
déterminer une valeur de mélange pour mélanger un premier pixel de la première séquence (A) et un second pixel de la seconde séquence (B), dans lequel la valeur de mélange est sur la base des paramètres d'effet, une position du premier pixel dans la première image, et une position du second pixel dans la seconde image ; et
déterminer une fonction de mélange définissant le mélange du premier pixel et du second pixel sur la base de la valeur de mélange.

16. Système selon la revendication 15, dans lequel la fonction de mélange est définie par :
α A + (1 - α) B, où α est la valeur de mélange, A est le premier pixel, et B est le second pixel.

17. Système selon la revendication 15, étant en outre adapté pour :
déterminer le premier pixel de la première séquence (A) et le second pixel de la seconde séquence (B) à mélanger sur la base des paramètres d'effet.
